# EUROPÄISCHE PATENTSCHRIFT

(11) **EP 2 196 637 B1**
(45) Veröffentlichungstag und Bekanntmachung des Hinweises auf die Patenterteilung: **04.09.2013**
(21) Anmeldenummer: 09177689.8
(22) Anmeldetag: 02.12.2009
(51) Int. Cl.: F01L 13/00, F16K 31/06, F16K 27/00, F16K 31/40, F16K 27/02

(54) **Hydraulische Baueinheit und Hydraulikventil zur Bildung der Baueinheit**
Hydraulic unit and hydraulic valve as component of the hydraulic unit
Unité hydraulique et soupape hydraulique faisant partie de cette unité hydraulique

(30) Priorität: 13.12.2008 DE 102008062166
(43) Veröffentlichungstag der Anmeldung: 16.06.2010
(73) Patentinhaber: Schaeffler Technologies AG & Co. KG, 91074 Herzogenaurach (DE)
(72) Erfinder: Krämer, Thomas, 90552 Röthenbach (DE); Meisborn, Marco, 91315 Höchstadt (DE); Alvermann, Steffen, Dr., 45130 Essen (DE); Weninger, Johannes, 91466 Gerhardshofen (DE); Meinel, Henrik, 91052 Erlangen (DE)

(56) Entgegenhaltungen:
- WO-A1-01/62566
- WO-A1-94/01708
- DE-A1- 4 141 546
- DE-A1- 4 330 616
- DE-A1- 4 332 819
- DE-A1- 4 414 583
- DE-A1- 4 439 059
- DE-A1- 19 952 855

## Beschreibung

### Gebiet der Erfindung

Die Erfindung betrifft eine hydraulische Baueinheit, insbesondere für eine elektrohydraulische Ventilsteuerung einer Brennkraftmaschine, und ein Hydraulikventil zur Bildung einer solchen Baueinheit. Diese umfasst ein Hydraulikventil mit einem Ventilgehäuse und einen Ventilträger mit einer Ventilaufnahme, in der das Ventilgehäuse aufgenommen ist. Zumindest im Bereich der Ventilaufnahme weist der Ventilträger eine deutlich geringere Werkstofffestigkeit als das Ventilgehäuse auf, das mit zwei jeweils von Nutwänden begrenzten Umfangsnuten versehen ist, die beidseits eines Hydraulikanschlusses verlaufen, der das Ventilgehäuse an dessen Umfang durchsetzt und mit einem in der Ventilaufnahme mündenden Hydraulikkanal im Ventilträger hydraulisch korrespondiert, und in die jeweils eine durch plastische Werkstoffverformung des Ventilträgers erzeugte Wulst aufgenommen ist derart, dass die Nutwände und die Wülste in Aufnahmerichtung des Ventilgehäuses sowohl das Ventilgehäuse in der Ventilaufnahme formschlüssig befestigend als auch hydraulisch dichtend zusammenwirken.

### Hintergrund der Erfindung

Eine derartige Baueinheit ist aus der DE 44 14 583 A1 vorbekannt. Die formschlüssige Befestigung des Ventilgehäuses in der Ventilaufnahme erfolgt mittels eines nachfolgend als Clinchverbindung bezeichneten Verstemmprozesses, der beim Fügen des Hydraulikventils mit dem Ventilträger selbsttätig abläuft. Zu diesem Zweck weisen der Umfang des Ventilgehäuses und der Ventilaufnahme im Bereich der Umfangsnuten Durchmesserstufen auf, die so aufeinander abgestimmt sind, dass das vom werkstofflich härteren und als Verstemmstempel wirkenden Ventilgehäuse verdrängte Material des Ventilträgers in die Umfangsnuten fließt und dort zu Wülsten verdichtet wird. Zur Verbesserung des Materialflusses ist es sowohl in der genannten Druckschrift vorgeschlagen als auch allgemein üblich, die Umfangsnuten hohlkehlenförmig, d.h. jeweils mit einer schrägen Nutwand seitens des kleineren Durchmessers in Fügerichtung zu gestalten.

Diese konstruktive Gestaltung kann jedoch im Hinblick auf die hydraulische Dichtfunktion der in die Umfangsnuten eingepressten Wülste dann problematisch sein, wenn die voneinander verschiedenen Werkstoffe des Ventilträgers und des Ventilgehäuses erheblich voneinander abweichende Temperaturausdehnungskoeffizienten haben und die Baueinheit großen betrieblichen Temperaturänderungen ausgesetzt ist. Dies gilt insbesondere dann, wenn zum einen die für die Clinchverbindung bekannte Werkstoffpaarung mit einem Ventilträger aus Aluminiumwerkstoff und einem Ventilgehäuse aus Stahlwerkstoff vorgesehen ist und wenn zum anderen die Baueinheit Teil der eingangs genannten elektrohydraulischen Ventilsteuerung einer Brennkraftmaschine bildet, wobei deren Funktion in einem für die Auslegung von Ventilsteuerungen typischen Temperaturbereich von -30°C bis 150°C mit abzudichtenden Spitzendrücken des Hydraulikmittels von etwa 150 bar zu gewährleisten ist. Denn während im Tieftemperaturbereich der Umfang der Ventilaufnahme deutlich stärker kontrahiert als der Umfang des Ventilgehäuses und sich insofern hervorragende Dichtkontakte sowohl innerhalb als auch außerhalb der Umfangsnuten einstellen, kann es umgekehrt im Hochtemperaturbereich zur Bildung eines Umfangsspalts zwischen der sich vergleichsweise stark aufdehnenden Ventilaufnahme und dem Ventilgehäuse kommen. Die Dichtwirkung der Clinchverbindung kann dann nur noch durch die Relativdehnung der Ventilaufnahme in Aufnahmerichtung des Ventilgehäuses aufrecht erhalten werden, indem sich die Wülste an die beiden äußeren, einander abgewandten Nutwände der Umfangsnuten anpressen.

Wie es auch an später erläuterten Figuren verdeutlicht ist, hängt die dabei maximal mögliche Anpresskraft jedoch weitestgehend von der Formgebung der hohlkehlenförmigen Umfangsnuten ab. Konkret besteht im Bereich der den Materialfluss begünstigenden Nutwandschrägen das Risiko unzureichend hoher Normalkräfte und dementsprechend einer unzureichenden Dichtwirkung zwischen Wulst und Nutwand.

### Aufgabe der Erfindung

Der vorliegenden Erfindung liegt daher die Aufgabe zugrunde, eine hydraulische Baueinheit der eingangs genannten Art bzw. ein Hydraulikventil zur Bildung einer solchen Baueinheit so fortzubilden, dass der vorgenannte Nachteil mit einfachen Mitteln beseitigt ist. Demnach soll die Clinchverbindung im gesamten betrieblichen Temperatur- und Druckbereich der Baueinheit eine ausreichende hydraulische Dichtwirkung erzeugen, um Leckagen von Hydraulikmittel in Aufnahmerichtung des Ventilgehäuses zumindest weitestgehend zu verhindern.

### Zusammenfassung der Erfindung

Die Lösung dieser Aufgabe ergibt sich aus den kennzeichnenden Merkmalen des unabhängigen Anspruchs 1, während vorteilhafte Weiterbildungen und Ausgestaltungen der Erfindung den zugehörigen Unteransprüchen entnehmbar sind. Demnach ist es vorgesehen, dass die einander zugewandten äußeren Nutwände der Umfangsnuten zueinander parallel und zur Aufnahmerichtung des Ventilgehäuses orthogonal verlaufen. Unter den äußeren Nutwänden sind eine Nutwand der ersten Umfangsnut und eine Nutwand der zweiten Umfangsnut zu verstehen, die am weitesten voneinander beabstandet und mithin einander zugewandt sind.

Die Erfindung basiert mit anderen Worten auf einer bewussten Abkehr von der bisher üblichen Gestaltung der Umfangsnuten mit jeweils in Fügerichtung orientierter Hohlkehlenform, um eine ausreichende Dichtwirkung der Clinchverbindung auch im oberen Betriebstemperaturbereich der Baueinheit sicherstellen zu können. Die erheblich gesteigerte Dichtwirkung bei hohen Temperaturen wird dadurch erzielt, dass die sich in Aufnahmerichtung des Ventilgehäuses stärker als die Umfangsnuten voneinander distanzierenden Wülste an den beiden äußeren Nutwänden der Umfangsnuten hohe Normalkräfte erzeugen, die mit entsprechenden Anpressdrücken hoher Dichtwirkung einhergehen.

In Weiterbildung der Erfindung ist es vorgesehen, dass ebenfalls die einander abgewandten inneren Nutwände der Umfangsnuten zueinander parallel und zur Aufnahmerichtung des Ventilgehäuses orthogonal verlaufen. Analog zu der vorstehenden Erläuterung handelt es sich bei den inneren Nutwänden um die andere Nutwand der ersten Umfangsnut und die andere Nutwand der zweiten Umfangsnut, die am geringsten voneinander beabstandet und mithin einander abgewandt sind.

Während die Formgebung des die Nutwände verbindenden Nutgrunds - hierunter ist die in Umfangsrichtung des Ventilgehäuses gerichtete Oberfläche einer Umfangsnut zu verstehen - zumindest weitgehend frei wählbar ist und beispielsweise kreisbogenförmig sein kann, sollen ferner die Umfangsnuten einen im wesentlichen rechteckigen Querschnitt aufweisen.

Diesbezüglich haben entsprechende Bauteilerprobungen der Anmelderin überraschenderweise gezeigt, dass auch im Falle der Umfangsnuten mit Rechteckquerschnitt ein für die formschlüssige Befestigung des Ventilgehäuses in der Ventilaufnahme ausreichendes Wulstvolumen in die Umfangsnuten fließen und verdichtet werden kann.

### Kurze Beschreibung der Zeichnungen

Weitere Merkmale der Erfindung ergeben sich aus der nachfolgenden Beschreibung und aus den teilweise schematischen Zeichnungen, in denen ein Ausführungsbeispiel der Erfindung dargestellt bzw. anhand derer die erfindungsgemäße Dichtwirkung erläutert ist. Soweit nicht anders erwähnt, sind dabei gleiche oder funktionsgleiche Merkmale oder Bauteile mit gleichen Bezugszahlen versehen. Es zeigen:
- Figur 1: eine hydraulische Baueinheit mit einem Ventilträger und einem darin mittels Clinchverbindung befestigten Hydraulikventil im Teilschnitt;
- Figur 2: das Hydraulikventil gemäß Figur 1 im Längsschnitt;
- Figur 3: eine erfindungsgemäße Clinchverbindung mit rechteckigen Umfangsnuten im vergrößerten Längsschnitt;
- Figur 4: die Einzelheit Z aus Figur 3 in weiter vergrößerter Darstellung
und jeweils in schematischer Darstellung:
- Figur 5: die Kräfteverhältnisse an der erfindungsgemäßen Clinchverbindung gemäß Figur 3 bei -30°C;
- Figur 6: die Kräfteverhältnisse an der erfindungsgemäßen Clinchverbindung gemäß Figur 3 bei 150°C;
- Figur 7: die Kräfteverhältnisse an einer erfindungsgemäßen Clinchverbindung mit trapezförmigen Umfangsnuten bei 150°C;
- Figur 8: die Kräfteverhältnisse an einer bekannten Clinchverbindung bei -30°C sowie
- Figur 9: die Kräfteverhältnisse an der bekannten Clinchverbindung bei 150°C.

### Detaillierte Beschreibung der Zeichnungen

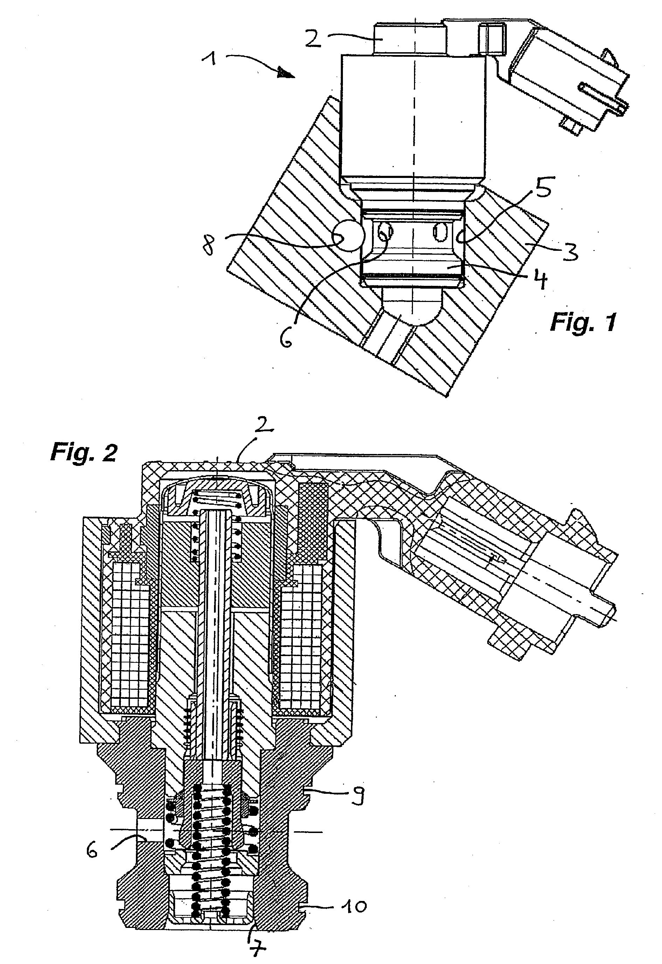

In Figur 1 ist eine hydraulische Baueinheit 1 offenbart, die aus einem Hydraulikventil 2 und einem Ventilträger 3 zusammengesetzt ist. Das Hydraulikventil 2 weist ein im Querschnitt kreisrundes Ventilgehäuse 4 aus Stahlwerkstoff auf, dass in einer zylindrischen Ventilaufnahme 5 des hier vollständig aus Aluminiumwerkstoff bestehenden Ventilträgers 3 aufgenommen und mittels einer Clinchverbindung formschlüssig und untrennbar im Ventilträger 3 befestigt ist. Bei dem in Figur 2 näher dargestellten Hydraulikventil 2 handelt es sich um ein elektrisch ansteuerbares 2/2-Wegeschaltventil an sich bekannter Bauart, das in Verbindung mit dem Ventilträger 3 Teil einer ebenfalls an sich bekannten elektrohydraulischen Ventilsteuerung einer Brennkraftmaschine mit variabel betätigten Gaswechselventilen bildet.

Der erste Hydraulikanschluss 6 durchsetzt das Ventilgehäuse 4 umfangsseitig und der zweite Hydraulikanschluss 7 verläuft stirnseitig des Ventilgehäuses 4 am Grund der Ventilaufnahme 5. Der Hydraulikanschluss 6 korrespondiert hydraulisch mit einem in der Ventilaufnahme 5 mündenden Hydraulikkanal 8 im Ventilträger 3 und verläuft zwischen zwei Umfangsnuten 9 und 10, die für die Herstellung der Clinchverbindung erforderlich sind (zur besseren Erkennbarkeit sind die Umfangsnuten 9, 10 bzgl. ihrer Dimensionierung stark übertrieben dargestellt und weisen in der praktischen Ausführung einen deutlich geringeren Querschnitt auf).

Wie bereits eingangs erwähnt, ist vorliegend unter dem Begriff Clinchverbindung eine plastische Werkstoffverformung des eine vergleichsweise geringe Werkstofffestigkeit aufweisenden Ventilträgers 3 zu verstehen, wobei die Werkstoffverformung beim Einschieben des als Verstemmstempel wirkenden Ventilgehäuses 4 in die Ventilaufnahme 5 erzeugt wird und das verdrängte Ventilträgermaterial unter Wulstbildung in die Umfangsnuten 9, 10 fließt und dort verdichtet wird.

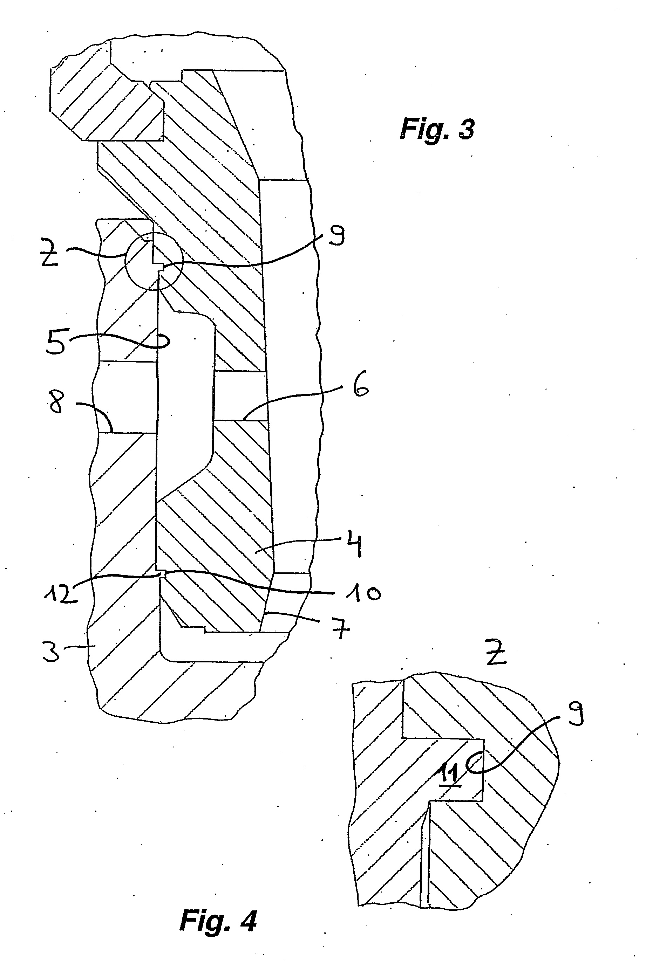

Die fertige Clinchverbindung geht in vereinfachter Darstellung aus Figur 3 und als vergrößerte Einzelheit Z aus Figur 4 hervor. Der durch die Wülste 11 und 12 erzeugte Formschluss dient sowohl zur dauerhaften Befestigung des Ventilgehäuses 4 im Ventilträger 3 als auch zur hydraulischen Abdichtung des Hydraulikanschlusses 6 in Aufnahmerichtung des Ventilgehäuses 4, d.h. gegenüber der Umgebung des Ventilträgers 3 einerseits und gegenüber dem stirnseitigen Hydraulikanschluss 7 andererseits. Die für die Wirkung des Ventilgehäuses 4 als Verstemmstempel erforderlichen Gestaltungsmerkmale hinsichtlich der Durchmesser- und Längenverhältnisse am Umfang des Ventilgehäuses 4 und der Ventilaufnahme 5, die jeweils im Durchmesser gestuft ausgebildet sind, sind im Stand der Technik grundsätzlich bekannt und insoweit hier nicht näher erläutert.

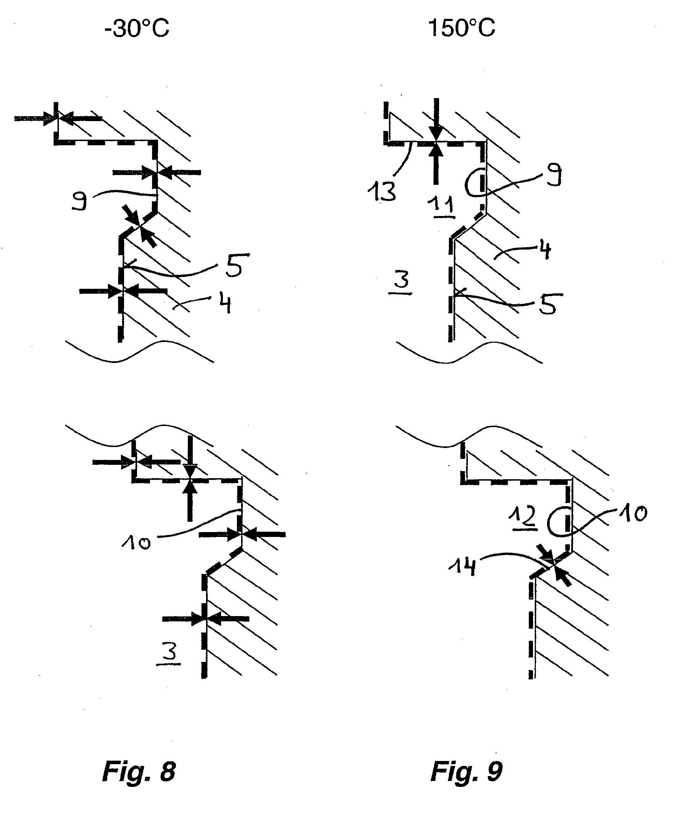

In den Figuren 8 und 9 sind die für die Dichtwirkung maßgeblichen und durch Doppelpfeile symbolisierten Kontaktkräfte einer bislang üblichen Clinchverbindung mit den beidseits des (hier nicht dargestellten) Hydraulikanschlusses 6 verlaufenden Umfangsnuten 9, 10 bei zwei betrieblichen Extremtemperaturen der hydraulischen Baueinheit 1, d.h. bei -30°C bzw. bei 150°C schematisch dargestellt. Bei der bekannten Clinchverbindung ist das Ventilgehäuse 4 mit hohlkehlenförmigen Umfangsnuten 9, 10 versehen, in welchen der zu den Wülsten 11, 12 plastisch verformte Werkstoff des Ventilträgers 3 aufgenommen ist.

Bei -30°C wird die Dichtwirkung der bei Raumtemperatur von etwa 20°C hergestellten Clinchverbindung in erster Linie durch in Umfangsrichtung wirkende Kontaktkräfte sowohl innerhalb als auch außerhalb der Umfangsnuten 9, 10 erzeugt, da infolge der unterschiedlichen Temperaturausdehnungskoeffizienten von Aluminium- und Stahlwerkstoff die Ventilaufnahme 5 im Durchmesser deutlich stärker als das Ventilgehäuse 4 kontrahiert.

Infolge der hierzu gegenteiligen Relativdehnung bei 150°C besteht jedoch die Möglichkeit, dass diese Kontaktkräfte vollständig aufgehoben werden, und es kann gemäß dem hier dargestellten Extremfall zur Bildung eines Umfangsspalts zwischen der Ventilaufnahme 5 und dem Ventilgehäuse 4 kommen. Die Dichtwirkung der Clinchverbindung kann nunmehr lediglich über die in Aufnahmerichtung des Ventilgehäuses 4 wirkenden Kontaktkräfte an den einander zugewandten äußeren Nutwänden 13 und 14 der Umfangsnuten 9 bzw. 10 aufrechterhalten werden. Diese Kontaktkräfte resultieren ebenfalls aus der thermisch bedingten Relativdehnung des Ventilträgers 3 gegenüber dem Ventilgehäuse 4 in dessen Aufnahmerichtung. Der in Aufnahmerichtung schräge Verlauf der äußeren Nutwand 14 bewirkt jedoch, dass die auf diese Nutwand 14 wirkende Normalkraft erheblich reduziert ist und dass dort dementsprechend die Dichtwirkung gegenüber dem Wulst 12 in erheblichem Umfang beeinträchtigt sein kann.

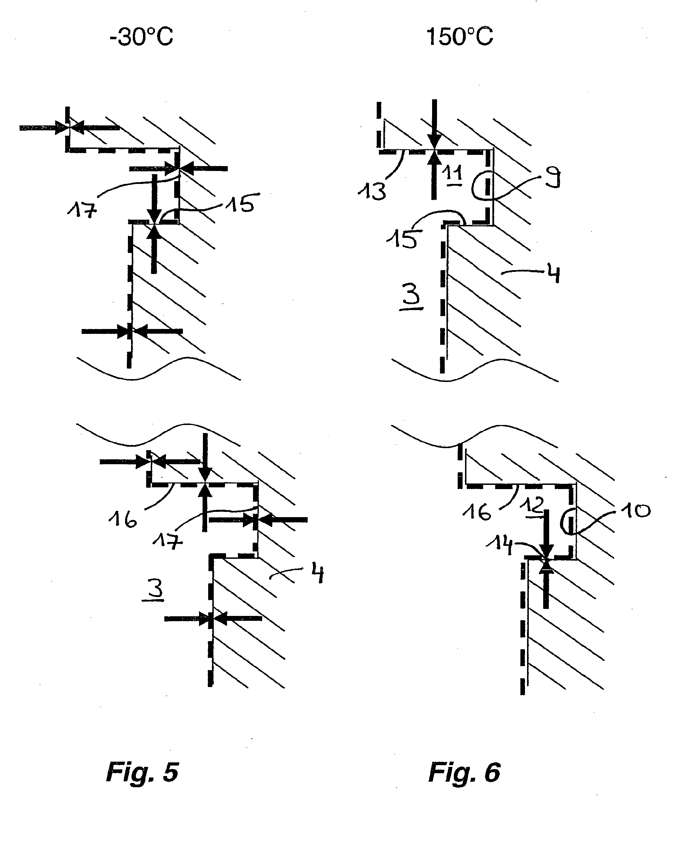

Eine den Figuren 8 und 9 entsprechende Darstellung mit einer erfindungsgemäßen Clinchverbindung ist in den Figuren 5 und 6 dargestellt. Die kostenneutral herstellbare, hinsichtlich der Dichtwirkung jedoch äußerst wirksame Modifikation gegenüber der bekannten Clinchverbindung betrifft die geometrische Formgebung der Umfangsnuten 9 und 10: sowohl deren äußere Nutwände 13 bzw. 14 als auch deren einander abgewandte innere Nutwände 15 bzw. 16 verlaufen sämtlich zueinander parallel und zur Aufnahmerichtung des Ventilgehäuses 4 orthogonal. In Verbindung mit einem zylindrischen Nutgrund 17 weisen die Umfangsnuten 9, 10 jeweils einen rechteckigen Querschnitt auf.

Die bei -30°C nach wie vor hervorragende Dichtwirkung wird zusätzlich durch die in Aufnahmerichtung wirkenden Kontaktkräfte unterstützt, mit denen die inneren Nutwände 15, 16 infolge der thermisch bedingten Relativkontraktion des Ventilträgers 3 gegenüber dem Ventilgehäuse 4 beaufschlagt werden. Die hierzu gegenteilige Relativdehnung bei 150°C kann wie vorstehend ausgeführt zur Folge haben, dass die Dichtwirkung der Clinchverbindung nur noch über die in Aufnahmerichtung wirkenden Kontaktkräfte an den äußeren Nutwänden 13, 14 aufrechterhalten werden kann. Die erfindungsgemäß modifizierte Formgebung der Umfangsnuten 9, 10 führt jedoch zu erheblich höheren Normalkräften auf die äußeren Nutwände 13, 14 und mithin zu hydraulisch ausreichend abdichtenden Kontaktpressungen gegenüber den Wülsten 11 und 12.

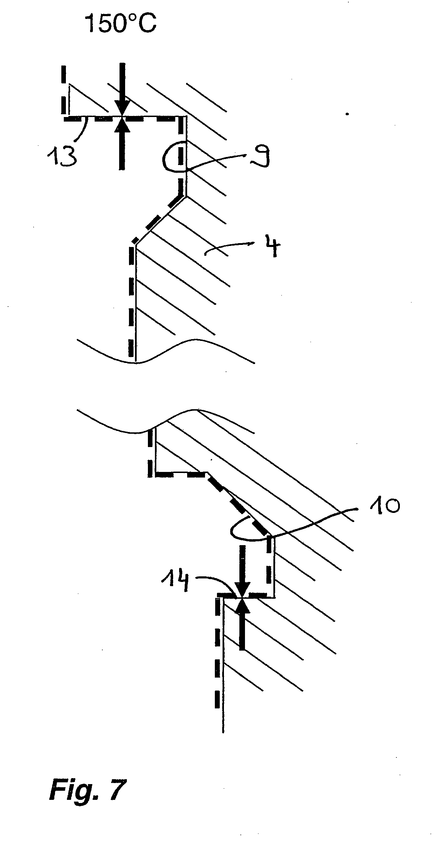

Eine alternative Clinchverbindung geht aus Figur 7, ebenfalls mit Kontaktkräften bei 150°C hervor. In diesem Fall beschränkt sich die Modifikation gegenüber der bekannten Clinchverbindung im wesentlichen auf die trapezförmige Gestaltung der Umfangsnut 10 seitens des zweiten Hydraulikanschlusses 7. Als erfindungswesentliches Merkmal ist es jedoch auch hier vorgesehen, dass die einander zugewandten äußeren Nutwände 13, 14 der Umfangsnuten 9 bzw. 10 zueinander parallel und zur Aufnahmerichtung des Ventilgehäuses 4 orthogonal verlaufen, um eine ausreichende Dichtwirkung der Clinchverbindung auch bei hoher Temperatur zu gewährleisten.

### Bezugszahlen

- 1: hydraulische Baueinheit
- 2: Hydraulikventil
- 3: Ventilträger
- 4: Ventilgehäuse
- 5: Ventilaufnahme
- 6: erster Hydraulikanschluss
- 7: zweiter Hydraulikanschluss
- 8: Hydraulikkanal
- 9: Umfangsnut
- 10: Umfangsnut
- 11: Wulst
- 12: Wulst
- 13: äußere Nutwand
- 14: äußere Nutwand
- 15: innere Nutwand
- 16: innere Nutwand
- 17: Nutgrund

## Patentansprüche

1. Hydraulische Baueinheit (1), insbesondere für eine elektrohydraulische Ventilsteuerung einer Brennkraftmaschine, umfassend ein Hydraulikventil (2) mit einem Ventilgehäuse (4) und einen Ventilträger (3) mit einer Ventilaufnahme (5), in der das Ventilgehäuse (4) aufgenommen ist, wobei zumindest im Bereich der Ventilaufnahme (5) der aus Aluminiumwerkstoff bestehende Ventilträger (3) eine deutlich geringere Werkstofffestigkeit als das Ventilgehäuse (4) aus Stahlwerkstoff aufweist, das mit zwei jeweils von Nutwänden (13, 15 und 14, 16) begrenzten Umfangsnuten (9, 10) versehen ist, die beidseits eines Hydraulikanschlusses (6) verlaufen, der das Ventilgehäuse (4) an dessen Umfang durchsetzt und mit einem in der Ventilaufnahme (5) mündenden Hydraulikkanal (8) im Ventilträger (3) hydraulisch korrespondiert, und in die jeweils eine durch plastische Werkstoffverformung des Ventilträgers (3) erzeugte Wulst (11, 12) aufgenommen ist derart, dass die Nutwände (13, 14, 15, 16) und die Wülste (11, 12) in Aufnahmerichtung des Ventilgehäuses (4) sowohl das Ventilgehäuse (4) in der Ventilaufnahme (5) formschlüssig befestigend als auch hydraulisch dichtend zusammenwirken, **dadurch gekennzeichnet, dass** die einander zugewandten äußeren Nutwände (13, 14) der Umfangsnuten (9, 10) zueinander parallel und zur Aufnahmerichtung des Ventilgehäuses (4) orthogonal verlaufen.

2. Hydraulische Baueinheit (1) nach Anspruch 1, **dadurch gekennzeichnet, dass** ebenfalls die einander abgewandten inneren Nutwände (15, 16) der Umfangsnuten (9,10) zueinander parallel und zur Aufnahmerichtung des Ventilgehäuses (4) orthogonal verlaufen.

3. Hydraulische Baueinheit (1) nach Anspruch 2, **dadurch gekennzeichnet, dass** die Umfangsnuten (9, 10) einen im wesentlichen rechteckigen Querschnitt aufweisen.

## Claims

1. Hydraulic unit (1), in particular for an electrohydraulic valve actuating mechanism of an internal combustion engine, comprising a hydraulic valve (2) with a valve housing (4) and a valve support (3) with a valve receptacle (5), in which the valve housing (4) is received, the valve support (3) which is composed of aluminium material having a considerably lower material strength at least in the region of the valve receptacle (5) than the valve housing (4) which is made from steel material and is provided with two circumferential grooves (9, 10) which are delimited in each case by groove walls (13, 15 and 14, 16) and run on both sides of a hydraulic connection (6) which penetrates the valve housing (4) on the circumference of the latter and corresponds hydraulically with a hydraulic duct (8) in the valve support (3), which hydraulic duct (8) opens in the valve receptacle (5), and into which circumferential grooves (9, 10) in each case one bead (11, 12) which is produced by plastic deformation of the valve support (3) is received in such a way that the groove walls (13, 14, 15, 16) and the beads (11, 12) interact in the receiving direction of the valve housing (4) so as to both fasten the valve housing (4) in the valve receptacle (5) in a positively locking manner and to seal hydraulically, **characterized in that** those outer groove walls (13, 14) of the circumferential grooves (9, 10) which face one another run parallel to one another and orthogonally with respect to the receiving direction of the valve housing (4).

2. Hydraulic unit (1) according to Claim 1, **characterized in that** those inner groove walls (15, 16) of the circumferential grooves (9, 10) which face away from one another likewise run parallel to one another and orthogonally with respect to the receiving direction of the valve housing (4).

3. Hydraulic unit (1) according to Claim 2, **characterized in that** the circumferential grooves (9, 10) have a substantially rectangular cross section.

## Revendications

1. Unité structurelle hydraulique (1), en particulier pour une commande de soupape électrohydraulique d'un moteur à combustion interne, comprenant une soupape hydraulique (2) avec un boîtier de soupape (4), et un support de soupape (3) avec un logement de soupape (5), dans lequel est reçu le boîtier de soupape (4), au moins dans la région du logement de soupape (5), le support de soupape (3) constitué d'un matériau à base d'aluminium présentant une résistance de matériau nettement plus faible que le boîtier de soupape (4) constitué d'un matériau à base d'acier, qui est pourvu de deux rainures périphériques (9, 10) limitées à chaque fois par des parois de rainure (13, 15 et 14, 16), qui s'étendent de chaque côté d'un raccord hydraulique (6) qui traverse le boîtier de soupape (4) au niveau de sa périphérie et qui correspond hydrauliquement à un canal hydraulique (8) dans le support de soupape (3) débouchant dans le logement de soupape (5), et dans lesquelles rainures périphériques est à chaque fois reçu un bourrelet (11, 12) produit par déformation plastique de matériau du support de soupape (3), de telle sorte que les parois de rainure (13, 14, 15, 16) et les bourrelets (11, 12) coopèrent dans la direction de réception du boîtier de soupape (4) en fixant par engagement positif et de manière hermétique hydrauliquement le boîtier de soupape (4) dans le logement de soupape (5), **caractérisée en ce que** les parois de rainure extérieures tournées l'une vers l'autre (13, 14) des rainures périphériques (9, 10) s'étendent parallèlement l'une à l'autre et perpendiculairement à la direction de réception du boîtier de soupape (4).

2. Unité structurelle hydraulique (1) selon la revendication 1, **caractérisée en ce que** les parois de rainure intérieures opposées l'une à l'autre (15, 16) des rainures périphériques (9, 10) s'étendent également parallèlement l'une à l'autre et perpendiculairement à la direction de réception du boîtier de soupape (4).

3. Unité structurelle hydraulique (1) selon la revendication 2, **caractérisée en ce que** les rainures périphériques (9, 10) présentent une section transversale essentiellement rectangulaire.
